# FASCICULE DE BREVET EUROPEEN

(11) **EP 1 148 571 B1**
(45) Date de publication et mention de la délivrance du brevet: **21.10.2009**
(21) Numéro de dépôt: 01108707.9
(22) Date de dépôt: 06.04.2001
(51) Int. Cl.: H01M 10/54, H01M 6/52

(54) **Procédé de recyclage et de valorisation de piles salines et alcalines**
Verfahren zum Recycling und Behandeln von salzartigen und alkalischen Batterien
Method for recycling and treating of salt and alkaline batteries

(30) Priorité: 17.04.2000 BE 200000275
(43) Date de publication de la demande: 24.10.2001
(73) Titulaire: Revatech S.A., 4020 Liège (BE)
(72) Inventeur: 't Serstevens, André, 4053 Embourg (BE)
(74) Mandataire: Gevers, François

(56) Documents cités:
- WO-A-93/11573
- DATABASE WPI Section Ch, Week 200020, Derwent Publications Ltd., London, GB; Class L03, AN 2000-226294, XP002172029 & ES 2 134 725 A1 (TECNICAS REUNIDAS SA) 01 Octobre 1999
- DATABASE WPI Section Ch, Week 198701 Derwent Publications Ltd., London, GB; Class L03, AN 1987-002684 XP002172030 & JP 61 261443 A (NIPPON MINING CO), 19 novembre 1986 (1986-11-19)

## Description

L'invention concerne un procédé de recyclage des piles salines et alcalines de toutes dimensions, permettant la valorisation de la plus grande partie de leurs constituants, qu'elles soient en mélange ou non : en outre, le procédé tolère la présence, en proportion limitée, de piles au lithium, d'accumulateurs nickel/cadmium et nickel-hydrures et de piles boutons. Ce procédé de recyclage comporte une succession de trois phases : le tri des lots de piles récoltées, le traitement mécanique des piles et le traitement physique et/ou physico-chimique des sous-produits obtenus lors de la deuxième phase.

De nos jours, la protection de l'environnement est devenue une préoccupation majeure voire une obligation. Vu la présence de produits toxiques ou dangereux tels que le mercure, le plomb, le zinc, le nickel ou encore le cadmium dans les piles et batteries électriques, il est apparu indispensable de proposer des solutions de traitement et de valorisation pour ce type de déchets. Ceux-ci sont maintenant collectés plutôt qu'éliminés en décharge comme de simples déchets ménagers . Depuis longtemps déjà. les batteries au plomb et au nickel-cadmium font l'objet d'un traitement approprié qui conduit au recyclage de leurs composants. Vu leur composition et leur forme très variées, le traitement des autres piles. principalement alcalines et salines, est plus complexe. Plusieurs procédés ont déjà été proposés. Les plus anciens nécessitent une étape de calcination ou de pyrolyse qui rend les opérations longues et coûteuses. D'autres exploitent ia voie pyrométallurgique (Citron. Valdi). D'autres encore, plus récents, soumettent le matériau broyé à une lixiviation en milieu soit acide soit basique, suivi d'un traitement électrolytique ou non de l'une ou l'autre des fractions obtenues (ex. Eurodieuze, Recupyl. Zimaval).

La présente invention se distingue des procédés précédemment cités de la façon qui suit
1° elle ne fait intervenir aucune opération thermique qui rend le procédé souvent très coûteux tant à la mise en oeuvre qu'à l'exploitation
2° elle soumet le matériau broyé à une lixiviation acide et réductrice qui permet de solubiliser, dans leur totalité, le manganèse et le zinc présents dans les piles salines et alcalines
3° elle ne fait intervenir aucun traitement électrolytique dont l'exploitation est souvent très complexe à gérer avec des produit de composition très variable et qui ne peuvent garantir ni la production de produits finis de qualité, ni un rendement énergétique stable.

Le procédé de recyclage comporte une succession de trois phases.

La première phase se déroule en deux étapes.
La première étape consiste en un tri manuel sur bande transporteuse, assurant l'élimination des corps étrangers et des piles indésirables.
La deuxième étape est le criblage mécanique de la masse pour la récupération des piles boutons.
A l'issue de la première phase, on a d'une part. les piles alcalines et salines et d'autre part les piles boutons, les corps étrangers et autres piles indésirables qui sont orientés vers des filières de traitement adéquates.
La deuxième phase est constituée par le traitement mécanique des piles comportant les opérations suivantes
- le broyage mécanique des piles ; ce broyage, à sec, s'effectue par un broyeur/concasseur qui peut être soit un broyeur rotatif à marteaux ou à barreaux mobiles, soit un broyeur à percussions ou encore un broyeur cisaille. En fait. n'importe quel type de broyeur peut être choisi . à condition qu'il réduise les piles considérées en fragments de 0 à 15/20 mm.
- la séparation magnétique du broyât au moyen soit d'un overband, soit d'un tambour magnétique pour en extraire les fragments de métaux ferreux qui seront appelés ultérieurement les « ferreux ».
- le fractionnement granulométrique du broyât déferraillé ; le broyat est divisé en trois catégories :
   - les particules de plus grandes dimensions ou supérieures à 5 mm appelées « gros »
   - les particules de dimensions intermédiaires ou comprises entre 3 et 5 mm appelées « moyens »
   - les fines particules ou particules ayant une dimension inférieure à 3 mm appelées « fins »
Le fractionnement granulométrique peut dans certains cas être limité à deux fractions : les supérieures à 3 mm et les inférieures à 3 mm. Les coupures granulométriques à 3 et 5 mm peuvent également varier en fonction des conditions opératoires, de la nature des piles à l'entrée de l'unité et des impératifs fixés par la qualité des produits finis ou de la conduite de la table densimétrique.
Les coupures peuvent alors être définies à 1, 2, 3, 4, ... ou 20 mm.
- une séparation qualitative, en deux étapes, des particules appelées « gros »:
   - un fractionnement densimétrique (table à air ou jigging) qui sépare les « gros » en trois catégories : 1) les éléments qualifiés de « lourds » tels que les fragments de zinc. de laiton, d'électrodes en carbone. 2) les éléments qualifiés de « légers » tels que les plastiques, les petits fragments métalliques et d'électrodes en carbone et 3) les éléments « très légers » tels que papier, cartons, ....
   - un fractionnement par Courants de Foucault (CDF) des éléments qualifiés de « légers » en éléments non-métalliques appelés « plastiques ». composés majoritairement de fragments de plastiques issus des carcasses des piles et de petits morceaux de carbone, et en éléments métalliques non-ferreux appelés « non-ferreux ». Ce type de fractionnement est également appliqué aux « lourds », de façon à séparer les pièces métalliques qui seront mélangées avec les « non-ferreux » issus du fractionnement des « légers ». des pièces non-métalliques telles que les électrodes en carbone, les morceaux de bakélites lourdes, ...que nous appellerons « rebus ».
L'ensemble des fractions produites peut donc se classifier comme suit :
a) les « fins» : particules de plus petites dimensions ou inférieures à 3 mm
b) les « moyens » : particules de dimensions intermédiaires ou comprises entre 3 et 5 mm. Cette fraction peut être inexistante si le criblage se limite à deux fractions.
c) les « rébus » : particules de plus grandes dimensions ou supérieures à 3 ou 5 mm obtenues par séparation densimétrique (fraction lourde) et dont on a extrait les métaux par Courants de Foucault.
d) les « non-ferreux » : particules de plus grandes dimensions ou supérieures à 3 ou 5 mm obtenues par la séparation densimétrique et extraites des « lourds » et/ou des « légers » par les Courants de Foucault (CDF).
e) les « plastiques » : particules de plus grandes dimensions ou supérieures à 3 ou 5 mm obtenues par la séparation densimétrique (fraction légère) et dont on a extrait les métaux par Courants de Foucault.
f) les « papiers » : particules de plus grandes dimensions ou supérieures à 3 ou 5 mm obtenues par la séparation densimétrique (fraction très légère).
g) les « ferreux » : particules magnétiques de toutes dimensions séparées des autres fractions par son tambour magnétique ou un overband.

La phase trois comporte le traitement physique et/ou physico-chimique de certaines fractions. D'autres sont directement valorisées.
Les « ferreux » -fraction g- sont séparés mécaniquement des fines particules non-magnétiques qui pourraient encore s'y trouver. Cette séparation pourra se faire par criblage ou par soufflage/dépoussiérage. Cette séparation est facultative. Les métaux ferreux, éventuellement dépoussiérés, sont valorisés tels quels vers la sidérurgie via le circuit des récupérateurs de ferraille.
Les « non-ferreux » -fraction d- sont valorisés vers la métallurgie. l'hydrométallurgie ou le circuit des récupérateurs/recycleurs de métaux non-ferreux.
Les « plastiques » -fraction e- sont lavés dans un mélange d'acides sulfurique et nitrique, puis rincés plusieurs fois à l'eau et enfin égouttés. Après ce traitement, les « plastiques » propres sont valorisés tels quels ou après un rebroyage suivant la filière à laquelle ils sont destinés.
Les « moyens » -fraction b-. s'ils existent, sont éventuellement rebroyés pour être intégrés aux « fins » -fraction a-. Le groupe appelé « Black Mass ». en raccourci « BM », comprend ainsi les « fins » -fraction a-, les « moyens » rebroyés fraction b- et les poussières récupérées dans le système d'aspiration et de dépoussiérage de l'installation.
Ce groupe « BM » est soumis à un traitement hydrométallurgique permettant l'extraction et la récupération de ses très hautes teneurs en zinc et manganèse.
Il comprend les étapes suivantes :
- la « BM » est d'abord lavée dans une solution de soude caustique, filtrée, et ensuite rincée à l'eau, une ou plusieurs fois, afin d'en extraire les chlorures. l' ammonium, le potassium et les autres sels solubles
- l'attaque acide de la « BM » lavée par une solution d'acide sulfurique. en présence de fer métallique (poudre, copeaux, ...). pour mettre en solution le zinc et le manganèse présent sous la valence 2 -. La fraction de manganèse mise en solution lors de cette étape dépend du degré d'usure des piles traitées
- la réduction de la pulpe ainsi obtenue, par du peroxyde d'hydrogène et en présence d'un antimousse, pour solubiliser le manganèse résiduaire constitué de MnO₂ (valence 4+).
- l'ajustement du pH par l'ammoniaque, l'oxyde de zinc ou l'oxyde de manganèse
- la floculation de la pulpe
- la filtration de la pulpe permettant de séparer une solution riche en sulfates de zinc et de manganèse et un résidu non-valorisable. éliminé comme déchet ultime après stabilisation.
- la purification de la solution de sulfates qui comprend les opérations suivantes
   a) l'ajustement du pH par H₂SO₄
   b) la cémentation du cuivre, du cadmium, du mercure et du plomb par de la poudre de zinc et l'élimination des céments par filtration
   c) la complexation du nickel par l'éthylxanthate de sodium ou de potassium après réajustement du pH si nécessaire et son élimination par filtration
- la valorisation du zinc et du manganèse compris dans la solution épurée soit par la valorisation de la solution elle-même, soit par précipitation sous forme d'un de leurs sels et la séparation de ceux-ci par filtration.

Il est évident que le procédé permet également de traiter tout matériau pouvant intégrer en quelques points que ce soit le processus décrit ci-dessus.
Dans le cas de la production d'une « BM » pauvre en MnO₂, le procédé peut être modifié comme suit :
- la réduction de la pulpe est omise
- l'ajustement du pH avant floculation se fait avec de la « BM » lavée
- la purification comprend alors
   a) la précipitation du fer au phosphate de sodium
   b) la cémentation du cuivre, du mercure et du plomb à la poudre de zinc après réajustement du pH
   c) l'élimination du nickel par complexation à l'éthylxanthate de sodium ou de potassium
- la valorisation du zinc et du manganèse

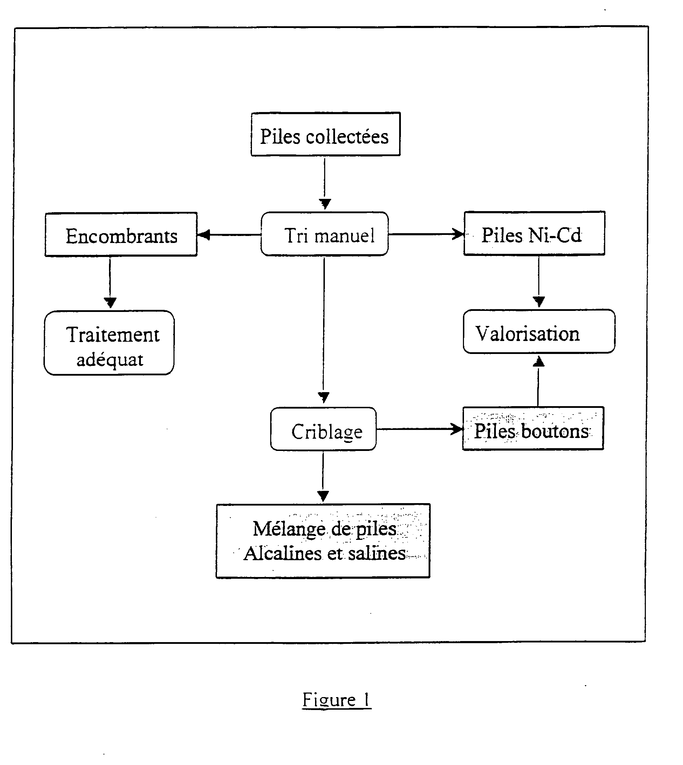

La figure 1 représente le diagramme des opérations de tri.

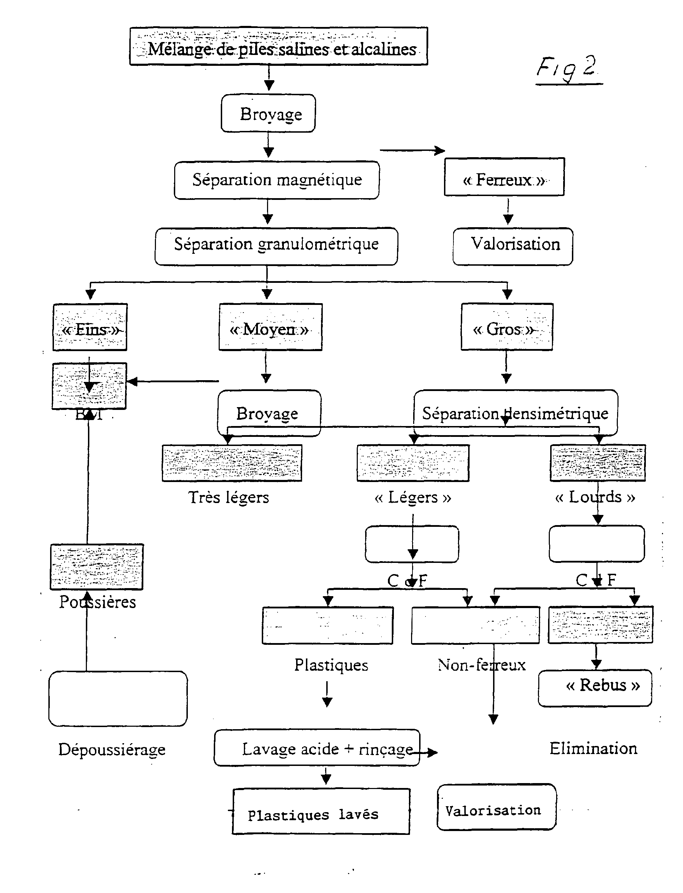

La figure 2 représente le diagramme des traitements mécaniques et physiques.

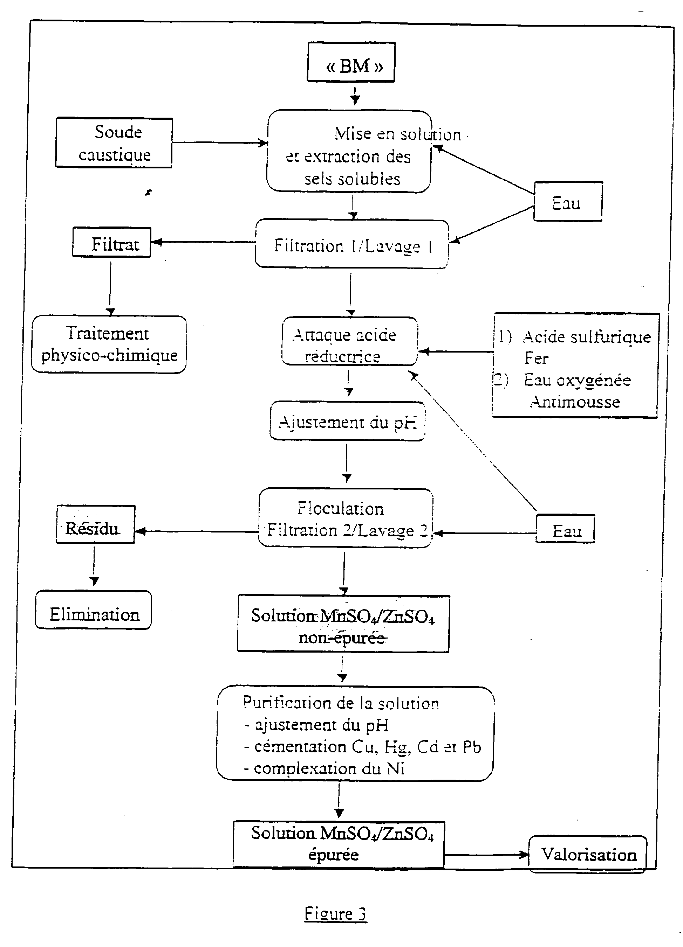

La figure 3 représente le diagramme du traitement physico-chimique.
La figure 4 représente le diagramme de l'unité de tri et de traitement mécanique.
La figure 5 représente le diagramme de l'unité de lavage acide des matières plastiques.
La figure 6 représente le diagramme de l'unité d'extraction et de valorisation du zinc et du manganèse

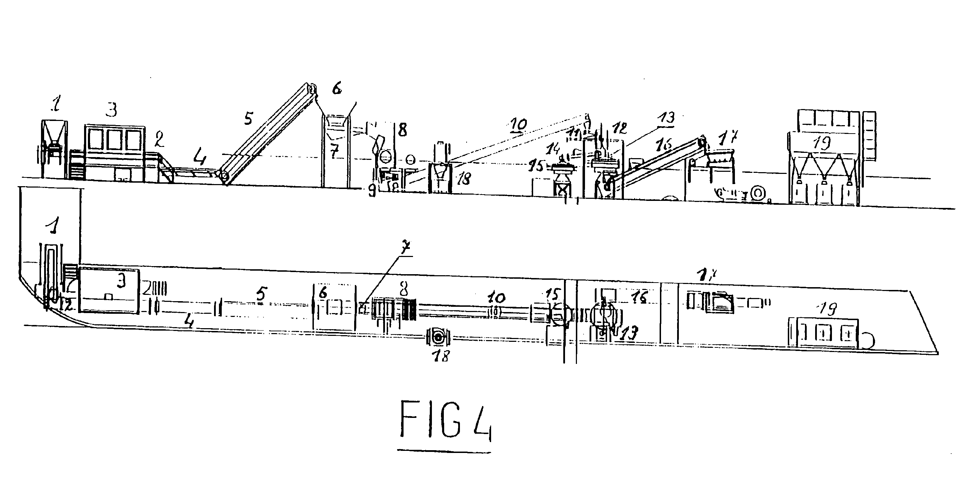

### 1- L'unité de tri et de traitement mécanioue (figure 4)

Cette unité comprend les éléments suivants :
a) une trémie d'alimentation 4.1
b) une bande transporteuse de triage manuel 4.2 qui passe par une cabine de triage 4.3 où sont extraits les corps étrangers et les piles indésirables (A)
c) un crible vibrant 4.4 de séparation des piles boutons (B)
d) une bande transporteuse d'alimentation de la trémie d'entrée du broyeur 4.5
e) une trémie de stockage intermédiaire 4.6
f) un vibrant balourdé d'alimentation automatique du broyeur 4.7
g) un broyeur/concasseur 4.8
h) un petit vibrant de désalimentation du broyeur 4.9
i) une bande transporteuse d'alimentation du séparateur magnétique 4.10
j) un vibrant d'alimentation du séparateur magnétique 4.11
k) un tambour magnétique de séparation des matières ferreuses 4.12
l) un couloir tubulaire vibrant 4.14 pour amener les matières magnétiques vers un crible oscillant de dépoussiérage
m) un crible oscillant de dépoussiérage des matières magnétiques 4.15 permettant d'obtenir des pièces ferreuses (C) exemptes des dernières contaminations laissées par les constituants internes de la pile. Ces derniers sont récupérés sous forme d'une fraction très fine (D) et ajoutés à la « BM »
n) un crible oscillant pour les matières non magnétiques 4.13. Ces dernières sont divisées en trois fractions :
   - les « fins » (E)
   - les « moyens » (F)
   - les « gros »
o) une bande transporteuse d'alimentation 4.16 des matières criblées non magnétiques appelées « gros » vers le séparateur densimétrique
p) un séparateur densimétrique « table à secousses » ou jigging 4.17 permettant de fractionner les « gros » en « lourds » (H), en « légers » (G) et en « très légers » (J)
q) un séparateur à Courants de Foucault (CDF) qui divise les « légers » et les « lourds » en « plastiques », « non-ferreux » et « rebus »(non représenté)
r) une installation de dépoussiérage comprenant :
   - un cyclone de pré-séparation 4.18
   - un filtre à manches 4.19
   qui permet de récupérer les poussières (I) produites lors du fonctionnement de l'installation.

### 2- L'unité de traitement physico-chimique

L'unité de traitement physico-chimique peut se diviser en deux parties. La première est utilisée pour effectuer le lavage acide de la fraction appelée « plastiques ». La seconde permet le recyclage et la valorisation du zinc et du manganèse des piles par le traitement hydrométallurgique de la « BM ».

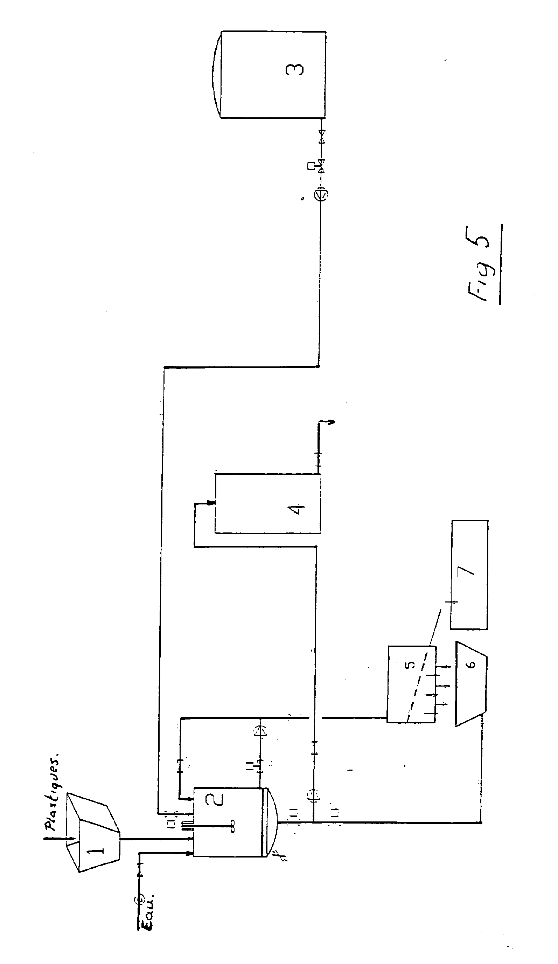

### Le lavage acide des « plastiques » (figure 5)

Cette unité comprend :
a) une trémie d'alimentation 5.1
b) un réacteur à fond conique 5.2 muni d'un agitateur mécanique et d'une grille perforée permettant la séparation des « plastiques » et de l'acide souillé ainsi que des premières eaux de lavage
c) un réservoir de stockage pour le réactif « acide sulfurique et nitrique en mélange » 5.3
d) un réservoir de stockage pour l'acide souillé et les eaux de rinçage en attente d'un traitement approprié 5.4
e) un crible vibrant pour la séparation des dernières eaux de lavage et l'égouttage des « plastiques » propres 5.5
f) un bassin de réception pour les dernières eaux de lavage et d'égouttage 5.6 avec retour vers la cuve de stockage 5.4
g) un conteneur de stockage pour les « plastiques » propres 5.7

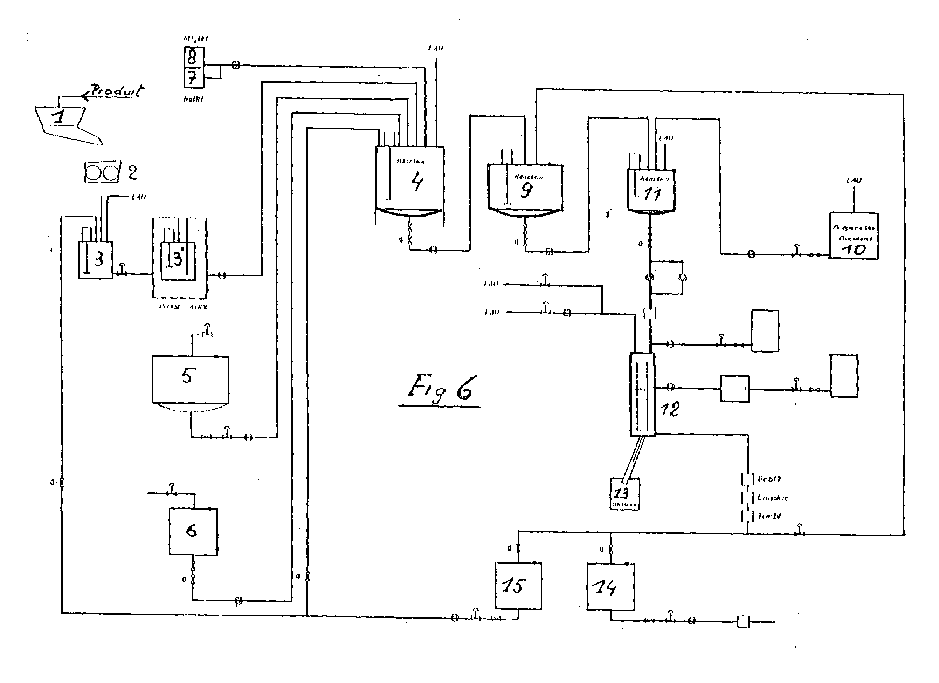

### L'extraction et la valorisation du zinc et du manganèse (figure 6)

L'unité d'extraction se compose de :
a) un poste de chargement comportant une trémie d'alimentation 6.1, suivie d'un émotteur 6.2. ou un délayeur destiné à recevoir soit la « BM ». soit les gâteaux issus du lavage basique
b) des réacteurs à fond conique 6.3 et 6.3' munis d'une hélice broyeuse, destiné à la mise en suspension des produits émottés
c) un réacteur à fond conique 6.4 muni d'un mélangeur mécanique, où s'opèrent le lavage alcalin.la lixiviation acide et la réduction de la pulpe
d) un réservoir de stockage pour le réactif « acide sulfurique » 6.5
e) un réservoir de stockage pour le réactif « eau oxygénée » 6.6
f) un réservoir de stockage pour le réactif « soude caustique » 6.7
g) un réservoir de stockage pour le réactif « ammoniaque » 6.8
h) un réservoir tampon à fond conique 6.9 muni d'un mélangeur mécanique
i) un réacteur pour la préparation du floculant 6.10
j) un réacteur de floculation à fond conique 6.11 muni d'un mélangeur mécanique
k) une unité de filtration 6.12 composée d'un filtre-presse, d'un système de compactage et d'un système de lavage des toiles
l) un conteneur pour le stockage des gâteaux de filtre-presse 6.13
m) réservoirs de stockage pour le filtrat à valoriser 6.14
n) un réservoir de stockage pour les eaux résiduaires du lavage basique 6.15.

## Revendications

1. Procédé pour le recyclage et la valorisation des piles salines et alcalines comportant une succession de trois phases; une première phase de tri des lots de piles récoltées: une deuxième phase de traitement mécanique des piles comportant le broyage mécanique des piles, la séparation magnétique du broyat, le fractionnement granulométrique du broyat déferraillé et la séparation qualitative des particules dits « gros » et donnant sept fractions de produits, les « ferreux », les « fins », les « moyens », les « rebus », les « non-ferreux », les « plastiques » et les « papiers »; et une troisième phase de traitement physique ou physico-chimique de ces fractions, les fractions « ferreux » et « non-ferreux » étant valorisées et la fraction « plastiques » étant lavée dans un mélange d'acides sulfurique et nitrique, rincée et égouttée, étant **caractérisée en ce que** dans une troisième phase la fraction « moyens » est rebroyée et intégrée à la fraction « fins » pour ne former qu'un groupe « Black Mass », ce groupe étant soumis à un traitement hydrométallurgique comprenant les étapes suivantes : d'abord un lavage dans une solution de soude caustique, une filtration et un rinçage afin d'extraire les chlorures, l'ammonium, le potassium et les autres sels solubles: ensuite une attaque acide par une solution d'acide sulfurique en présence de fer métallique pour mettre en solution le zinc et le manganèse; ensuite la réduction par du peroxyde d'hydrogène en présence d'un antimousse pour solubiliser le manganèse résiduaire, l'ajustement du pH par l'ammoniaque, l'oxyde de zinc ou l'oxyde de manganèse, la floculation du groupe, la filtration permettant de séparer une solution riche en sulfates de zinc et de manganèse, la purification de la solution comprenant l'ajustement du pH par H₂SO₄, la cémentation du cuivre, du cadmium, du mercure et du plomb par de la poudre de zinc et l'élimination des céments par filtration, et la complexation du nickel par l'éthylxanthate de sodium ou de potassium après réajustement du pH et son élimination par filtration et ensuite la valorisation des sulfates de zinc et de manganèse compris dans la solution épurée tels quels ou après précipitation.

2. Procédé pour le recyclage et la valorisation des piles salines et alcalines selon la revendication 1 **caractérisé en ce que** la réduction du groupe est omise, l'ajustement du pH avant floculation se fait avec des produits lavés du même groupe, et **en ce que** la purification comprend alors la précipitation du fer au phosphate de sodium, la cémentation du cuivre, du mercure et du plomb à la poudre de zinc après réajustement du pH. l'élimination du nickel par complexation à l'éthylxanthate de sodium ou de potassium et l'anodisation du manganèse.

3. Procédé pour le recyclage et la valorisation des piles salines et alcalines selon la revendication 1, **caractérisé en ce qu'**il utilise une unité de traitement physico-chimique pouvant se diviser en deux parties, la première utilisée pour effectuer le lavage acide de la fraction « plastiques »en vue de sa valorisation comme combustible, la seconde permettant le recyclage et la valorisation des hautes teneurs en zinc et manganèse des piles par le traitement hydrométallurgique.

4. Procédé pour le recyclage et la valorisation des piles salines et alcalines selon les revendications 1 et 3. **caractérisé en ce qu'**il utilise une unité pour le lavage - acide des « plastiques » comprenant une trémie d'alimentation (5.1), un réacteur à fond conique (5.2), un réservoir de stockage (5.3) pour le réactif « acide sulfurique et nitrique » en mélange, un réservoir de stockage (5.4) pour l'acide souillé et les eaux de rinçage, un crible (5.5) vibrant : un bassin (5.6) de réception pour les dernières eaux de lavage et d'égouttage et un conteneur (5.7) pour le stockage des « plastiques » propres.

5. Procédé pour le recyclage et la valorisation des piles salines et alcalines selon les revendications 1 et 3. **caractérisé en ce qu'**il utilise une unité d'extraction et de valorisation du zinc et du manganèse comprenant une trémie d'alimentation (6.1) destinée à recevoir les produits du groupe « Black Mass », un émotteur (6.2), des réacteurs 6.3 et 6.3', à fond conique munis d'une hélice broyeuse, un réacteur (6.4) à fond conique muni d'un mélangeur mécanique, un réservoir (6,5) de stockage pour le réactif « acide sulfurique », un réservoir (6.6) de stockage pour le réactif « eau oxygénée », un réservoir (6.7) de stockage pour le réactif « soude caustique », un réservoir (6.8) pour le stockage du réactif « ammoniaque », un réservoir (6.9) tampon à fond conique avec mélangeur mécanique, un réacteur (6.10) pour le floculant, un réacteur (611) de floculation, une unité (6.12) composée d'un filtre-presse, d'un système de compactage et d'un système de lavage des toiles, d'un conteneur (6.13) pour le stockage des gâteaux de filtre-presse et de réservoirs (6.14) pour le filtrat à valoriser et pour les eaux résiduaires du lavage basique.

## Claims

1. Process for recycling and valorisation of saline and alkaline batteries, comprising a series of three phases: a first phase wherein the batches of collected batteries are sorted, a second phase of mechanical treatment of the batteries, comprising the mechanical grinding of the batteries, the magnetic separation of the ground matter, the fractional sieving of the de-ironed ground matter and the qualitative separation of the so-called "large" particles and resulting into seven product fractions: "ferrous", "fines", "medium", "scraps", "non-ferrous", "plastics" and "paper"; and a third phase of physical or physical-chemical treatment of these fractions, the "ferrous" and "non-ferrous" parts fractions being valorised and the "plastics" fraction being washed in a mixture of sulphuric and nitric acids, rinsed and drained, **characterised in that**, in the third phase, the "medium" fraction is re-ground and integrated into the "fines" fraction to form a single group called "Black Mass", this group being subjected to a hydrometallurgical treatment comprising the following stages: firstly a caustic soda wash, a filtration and a rinse in order to extract the chlorides, the ammonium, the potassium and the other soluble salts; then an acid attack with a sulphuric acid solution in presence of metallic iron in order to dissolve the zinc and manganese; then a reduction by hydrogen peroxide in presence of an anti-froth for dissolving the residual manganese, the adjustment of pH by ammonia, zinc oxide or manganese oxide, the flocculation of the group, the filtration allowing the separation of a solution rich in zinc and manganese sulphates, the purification of the solution comprising the adjustment of the pH by H₂SO₄, the cementation of copper, cadmium, mercury and lead by zinc powder and the elimination of cements by filtration, and the complexing of nickel with sodium or potassium ethylxanthate after re-adjustment of the pH and its elimination by filtration and then the valorisation of the zinc and magnesium sulphates contained in the purified solution as they are or after precipitation.

2. Process for the recycling and the valorisation of saline and alkaline batteries according to claim 1 **characterised in that** the reduction of the group is omitted, the adjustment of pH before flocculation is done with the washed products of the same group, and
**in that** the purification comprises then the precipitation of iron with sodium phosphate, the cementation of the copper, mercury and the lead by zinc powder after re-adjustment of the pH, the elimination of nickel by complexing by sodium or potassium ethylxanthate and the anodising of the manganese.

3. Process for the recycling and the valorisation of saline and alkaline batteries according
to claim 1, **characterised in that** it uses a physico-chemical treatment unit which
can be divided into two parts, the first one being used for carrying out the acid washing of the "plastics"
fraction for valorising it as fuel, the second allowing recycling and valorisation
of the high content of zinc and manganese in the batteries by the hydro-metallurgic treatment.

4. Process for the recycling and the valorisation of saline and alkaline batteries according to
claims 1 and 3 **characterised in that** it uses a unit for the acid washing of the "plastics"
comprising a feed hopper (5.1), a reactor with a conical bottom (5.2), a storage vessel (5.3) for the mixed "sulphuric and nitric acid" reagent , a storage vessel (5.4)
of the dirty acid and the rinsing water, a vibrating sieve (5.5): a reception basin (5.6) for the final washing and drainage water and a storage container (5.7) for clean "plastics".

5. Process for the recycling and valorisation of saline and alkaline batteries according to
claims 1 and 3, **characterised in that** it uses an extraction and valorisation unit for zinc
and manganese comprising a feed hopper (6.1) for receiving products of the "Black Mass" group, a rake (6.2), reactors 6.3 and 6.3' with conical bottoms provided
with a grinding blade, a reactor (6.4) with conical bottom provided with a mechanical
mixer, a storage vessel (6.5) for the "sulphuric acid" reagent, a storage vessel (6.6) for
the "peroxidated water" reagent, a storage vessel (6.7) for the "caustic soda" reagent, a storage vessel (6.8) for the "ammonia" reagent, a buffer vessel (6.9)
with conical bottom and a mechanical mixer, a reactor (6.10) for the flocculent,
a flocculation reactor (6.11), a unit (6.12) consisting of a filter press, a compacting system and a system for washing fabric, a storage container (6.13) for the filter press cakes and vessels (6.14) for the filtrate to be valorised and the effluent from the alkaline wash.

## Patentansprüche

1. Verfahren zur Wiederaufbereitung und Wiederverwertung salzhaltiger und alkaliner Batterien, bestehend aus einer Folge dreier Phasen: einer ersten Phase des Sortierens der eingesammelten Batterien, einer zweiten Phase der mechanischen Behandlung der Batterien, die eine mechanische Zerkleinerung der Batterien, das magnetische Trennen des Zerkleinerungsguts, die größenmäßige Aufteilung des von den Umhüllungen befreiten Zerkleinerungsgutes und die qualitative Trennung der als «groß» bezeichneten partikel und wobei sieben Produktbestandteile erhalten werden, «eisenhaltig», «fein», «mittel», «Ausschuß», «nicht- eisenhaltig», «Plastikmaterial» und «papier» umfaßt, und eine dritte Phase der physikalischen oder physiko- chemischen Behandlung dieser Fraktionen, wobei die Fraktionen «eisenhaltig» und «nicht-eisenhaltig» wiederverwertet werden und die Fraktion «Plastikmaterial» in. einer Mischung aus Schwefel- und Salpetersäure gewaschen, gespült und abtropfen gelassen wird, **dadurch gekennzeichnet**, daB in einer dritten Phase die Fraktion «mittel» erneut zerkleinert wird und der Fraktion «fein» zur Bildung nur einer Gruppe «schwarze Masse» hinzugefügt wird, wobei diese Gruppe einer hydrometallurgischen Behandlung unterworfen wird, die die folgenden Schritte umfaßt: zunächst ein Waschen in einer Atzsodalosung, eine Filtration und eine Spülung, um die Chloride, den Stickstoff, das Kalium und die anderen löslichen Salze zu entfernen, danach ein Säureangriff durch eine Schwefelsäurelosung in Anwesenheit von metallischem Eisen, um das zink und das Mangan in Lösung zu bringen, danach eine Reduzierung durch wasserstoffperoxid in Anwesenheit eines Anti-Schaummittels, um das restliche Mangan löslich zu machen, eine Anpassung des pH-Wertes durch Ammoniak, Zinkoxid oder Manganoxid, die Ausflockung der Gruppe, wobei es die Filtration erlaubt, eine an zink- und Mangansulfaten reiche Lösung zu trennen, die Reinigung der Lösung inklusive der Anpassung des pH-Wertes durch H₂SO₄, die Zementation des Kupfers, Kadmiums, Quecksilbers und Bleis durch Zinkpulver und das Entfernen der Zemente mittels Filtration und die Komplexation des Nickels durch Natrium- oder Kalium-Athylxanthat nach Anpassung des pH-Wertes sowie seine Entfernung mittels Filtration und danach die Aufbereitung der in der gereinigten Lösung enthaltenen zink- und Mangansulfate gleichzeitig mit oder nach der Ausscheidung.

2. Verfahren zur Wiederaufbereitung und Wiederverwertung salzhaltiger und alkaliner Batterien gemäß Anspruch 1, **dadurch gekennzeichnet, daß** die Reduzierung der Gruppe ausgelassen wird, die Anpassung des pH-Wertes vor der Ausflockung mit den ausgewaschenen produkten der selben Gruppe durchgeführt wird und daß die Reinigung dann die Abscheidung des Eisens mit Natriumphosphat, die Zementation des Kupfers, des Quecksilbers und des Bleis mit Zinkpulver nach Anpassung des pH-Wertes, die Komplexation des Nickels durch Natrium- oder Kalium-Athylxanthat und die Anodisation des Mangans umfaßt.

3. Verfahren zur Wiederaufbereitung und Wiederverwertung salzhaltiger und alkaliner Batterien gemäß Anspruch 1, **dadurch gekennzeichnet, daß** eine physiko-chemische Behandlungseinheit verwendet wird, die in zwei Teile getrennt werden kann, die erste, die verwendet wird, um die saure Spülung der Fraktion «Plastikmaterialien» im Hinblick auf eine Verwertung als Brennstoff durchzuführen, die zweite, die die Wiederaufbereitung und Wiederverwertung der hohen Zink-und Mangangehalte der Batterien durch die hydrometallurgische Behandlung ermöglicht.

4. Verfahren zur Wiederaufbereitung und Wiederverwertung salzhaltiger und alkaliner Batterien gemäß den Ansprüchen 1 und 3, **dadurch gekennzeichnet, daß** eine Einheit für die saure Spülung der «Plastikmaterialien», ein Zuführtrichter (5.1), ein Reaktor mit kegelförmigem Boden (5.2), ein Vorratsbehälter (5.3) für das Reagens «Schwefel- und Salpetersäure» als Gemisch, ein Lagerbehälter (5.4) für die verunreinigte Säure und das Spülwasser, ein Rüttelsieb (5.5), ein Becken (5.6) zur Aufnahme und Ableitung des letzten Spülwassers und ein Behälter (5.7) für die Lagerung der geeigneten «Plastikmaterialien» verwendet werden.

5. Verfahren zur Wiederaufbereitung und wiederverwertung salzhaltiger und alkaliner Batterien gemäß den Ansprüchen 1 und 3, **dadurch gekennzeichnet, daß** eine Einheit zur Abtrennung und Wiederverwertung des Zinks und Mangans verwendet wird, die einen Zuführtrichter (6.1) zur Aufnahme der Produkte der Gruppe «schwarze Masse», ein Mahlwerk (6.2), Reaktoren 6.3 und 6.3' mit kegelförmigen Böden, die jeweils mit einem Zerkleinerungspropeller ausgerüstet sind, einen Reaktor (6.4) mit kegelförmigem Boden, der mit einem mechanischen Mischer ausgerüstet ist, einen Lagerbehälter (6.5) für das Reagens «Schwefelsäure», einen Lagerbehälter (6.6) für das Reagens «mit Sauerstoff angereichertes Wasser», einen Lagerbehälter (6.7) für das Reagens «Atzsoda», einen Lagerbehälter (6.8) für das Reagens «Ammoniak», einen mit einem Stopfen verschlossener Behälter " (6.9) mit kegelförmigem Boden mit einem mechanischen Mischer, einen Reaktor (6.10) für das Ausflockmittel, einen Ausflockungsreaktor (6.11), eine aus einer Filterpresse bestehende Einheit (6.12), ein Kompaktierungssystem und ein System zum Spülen der Gewebe, einen Behälter (6.13) für die Lagerung des in der Filterpresse erzeugten Kuchens und Behälter (6.14) für das wieder zu verwertende Filtrat und für das aus der basischen Spülung resultierende Rückstandswasser aufweist.
